(19) Europäisches Patentamt / European Patent Office / Office européen des brevets

(11) **EP 4 197 913 B1**

(12) **EUROPEAN PATENT SPECIFICATION**

(45) Date of publication and mention
of the grant of the patent:
**29.01.2025 Bulletin 2025/05**

(21) Application number: **22208027.7**

(22) Date of filing: **17.11.2022**

(51) International Patent Classification (IPC):
**B64D 25/00** *(2006.01)*    **B64D 31/00** *(2024.01)*
**F02C 7/32** *(2006.01)*    **H02J 7/14** *(2006.01)*

(52) Cooperative Patent Classification (CPC):
**F02C 7/32; B64D 27/026; B64D 31/06; F02C 6/14;
F02C 6/20; F02C 9/00; F02K 5/00; H02J 7/143;
H02J 7/1438; H02J 7/1446; H02J 7/1492;
H02J 9/061;** B64D 2221/00; F05D 2220/76;
H02J 2207/50;                                    (Cont.)

(54) **AIRCRAFT POWER AND PROPULSION SYSTEMS AND METHODS OF OPERATING AIRCRAFT POWER AND PROPULSION SYSTEMS**

KRAFT- UND ANTRIEBSSYSTEME FÜR FLUGZEUGE UND VERFAHREN ZUM BETRIEB VON KRAFT- UND ANTRIEBSSYSTEMEN FÜR FLUGZEUGE

SYSTÈMES D'ALIMENTATION ET DE PROPULSION D'AÉRONEF ET PROCÉDÉS DE FONCTIONNEMENT DE SYSTÈMES D'ALIMENTATION ET DE PROPULSION D'AÉRONEF

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **14.12.2021 GB 202118045**

(43) Date of publication of application:
**21.06.2023 Bulletin 2023/25**

(73) Proprietor: **Rolls-Royce plc**
**London N1 9FX (GB)**

(72) Inventors:
• **Moore, Gareth**
  **Derby, DE24 8BJ (GB)**
• **Davies, Paul**
  **Derby, DE24 8BJ (GB)**
• **Husband, Stephen**
  **Derby, DE24 8BJ (GB)**
• **Trainer, David**
  **Derby, DE24 8BJ (GB)**
• **Scothern, David**
  **Derby, DE24 8BJ (GB)**
• **George, Luke**
  **Derby, DE24 8BJ (GB)**
• **Herbert, Douglas**
  **Derby, DE24 8BJ (GB)**

(74) Representative: **Rolls-Royce plc**
**Moor Lane (ML-9)**
**PO Box 31**
**Derby DE24 8BJ (GB)**

(56) References cited:
**EP-B1- 3 344 545      US-A1- 2011 178 648
US-A1- 2012 318 914**

**(Cont. next page)**

(52) Cooperative Patent Classification (CPC): (Cont.)
H02J 2310/44; H02J 2310/52; H02J 2310/58;
H02J 2310/60; H02J 2310/62; Y02T 50/60

## Description

## TECHNICAL FIELD

This disclosure concerns a method of operating aircraft power and propulsion systems.

## BACKGROUND

In aerospace, there is a trend towards aircraft and their propulsion systems becoming 'more electric' in their design. For example, aircraft and engine systems and accessories which have previously been mechanically, pneumatically or hydraulically powered may be replaced with electrically powered equivalents. Spool-coupled electric machines with high power ratings may be utilized to increase the power generation capability to meet the increased electrical power demand. Spool-coupled electric machines may also be used to accelerate or decelerate the spools of the engines to improve engine operability, for example to improve engine surge margin and reduce fuel consumption. Hybrid electric aircraft similarly utilize a large amount of electrical power to power propulsive and non-propulsive electrical loads.

The increased use of electrical power in these engines and aircraft creates opportunities in terms of weight reduction, reduced mechanical losses and reduced fuel consumption. However, it also creates new fault modes.

United States Patent Application Publication US 2012/318914 A1 relates to aircraft systems and methods for powering one or more critical loads where one or more engines fail. The system includes a generator, coupled to a main engine. In case the generator fails, an auxiliary power (APU) unit is provided. Where the APU fails or is incapable of providing sufficient power to loads, an emergency power system is configured to supply power to certain loads.

European Patent Publication EP 3344545 B1 relates to a vehicle comprising an engine restart system.

United States Patent Application Publication US 2011/178648 A1 relates to an aircraft power management system.

## SUMMARY

According to a first aspect, there is provided a method of operating an aircraft power and propulsion system. The power and propulsion system comprises: one or more propulsive gas turbine engines, each engine comprising a plurality of spools including a first spool and a second spool, a first electric machine mechanically coupled with the first spool and a second electric machine mechanically coupled with the second spool, wherein each of the first and second electric machines of each of the one or more gas turbine engines comprise a first sub-machine and a second sub-machine; and an electrical system connected with the electric machines and comprising an electrical energy storage system. The method comprises: operating one or more of the electric machines of the one or more gas turbine engines as generators to extract, for each of the one or more gas turbine engines, greater than 5% of a combined mechanical power from one or more of the spools and to generate electrical power therefrom; meeting an electrical power demand, $P_D$, of a plurality of electrical loads connected with the electrical system by supplying the plurality of electrical loads with electrical power generated by the one or more electric machines; and determining a condition to the effect that there is a fault in one or more of the electric machines and that an amount of electrical power being generated by the power and propulsion system (100) has reduced to a lower level, $P_{fault}$. The method further comprises, responsive to the determination: during a time period $\Delta T$, meeting at least part of the electrical power demand of the plurality of electrical loads by discharging the electrical energy storage system; and during the time period $\Delta T$, controlling the plurality of electrical loads to reduce the electrical power demand.

Thus, in the event of a fault or failure which results in a sudden drop in the power generation capability of the system, the energy storage system (ESS) automatically discharges so as to provide a time period, $\Delta T$, in which the system power demand can be managed and brought to a sustainable level. This reduces the risk that the reduction in the power generation capability will escalate, for example due to a sudden erosion of engine surge margin that leads to a further drop in the amount of power than be extracted from the engine(s).

This approach may be particularly effective in platforms which feature a high level of electrical loading relative to the amount power produced by the prime mover(s), and/or a high level of criticality in the electrical loading. For example, in such a platform, a sudden drop in the power generation capability could result in the power demand exceeding the power generation capability, which could lead to critical loads losing power. This could itself lead to a further, possibly unrecoverable, drop in power generation capability. As another example, meeting the electrical power demand following a sudden drop in power generation capability could result in a sudden erosion of engine surge margin. If an engine surges then the power generation capability could drop further, and this could then lead to critical loads losing power.

Thus, the plurality of electrical loads may include one or more critical electrical loads. The term "critical electrical load" will be understood by those skilled in the art to refer an electrical load whose function is essential to the operation of the overall power and propulsion system or the aircraft as a whole. One example of a critical electric load is an electrically-powered fuel pump, which supplies fuel to the combustion equipment of a gas turbine engine. If such a fuel pump loses power then the combustion equipment is not supplied with fuel and will shut down, leading to a drop in power generation capability. Another example of a critical electric load is an electrically-powered oil pump which supplies lubrication to the bearings of an engine shaft or power gearbox, for example. If such an oil pump loses power then the engine could seize, leading to a drop in power generation capability. Other examples of critical electrical loads may include engine controllers (e.g. FADECs) and actuators for aircraft control surfaces.

The amount and fraction of the power extracted from the engine spool(s) by the electric machines to power the electrical loads may be higher than in conventional systems. For example, in some embodiments, prior to the determination of a fault or failure, a peak value of the percentage of the total combined shaft power of the plurality of spools of an engine extracted from the shafts and converted to electrical power is greater than 5%. In some embodiments, the percentage may even be greater than 7%, 8% or even greater than 10%. Generally, the peak percentage will be less than 20%, and is preferably less than 15%. For example, the peak value may be in the range 7-15%. In some embodiments, a ratio defined as: a combined rated power of all of the one or more electrical machines mechanically coupled with the spools of the gas turbine engine, divided by the maximum rated thrust of the gas turbine engine, may be greater than 3.5 $\mathrm{WN^{-1}}$. The thrust rating is a dry thrust rating (i.e. without the use of reheat/afterburner, if such a system is present in the engine). The ratio may be greater than 4.0 $\mathrm{WN^{-1}}$, greater than 4.5 $\mathrm{WN^{-1}}$, greater than 5.0 $\mathrm{WN^{-1}}$, greater 5.5 $\mathrm{WN^{-1}}$, or even greater than 6.0 $\mathrm{WN^{-1}}$. The ratio may be less than 15.0 $\mathrm{WN^{-1}}$. In one group of embodiments, the ratio is between 4.5 $\mathrm{WN^{-1}}$ and 13 $\mathrm{WN^{-1}}$, preferably between 5.0 $\mathrm{WN^{-1}}$ and 12 $\mathrm{WN^{-1}}$. In an embodiment, the ratio is between 8.5 $\mathrm{WN^{-1}}$ and 12 $\mathrm{WN^{-1}}$.

The time period $\Delta T$ is preferably at least 5 seconds, and may be longer, for example at least 10 seconds, at least 30 seconds or at least 1 minute.

In order to supply the required power for the time period $\Delta T$, the energy storage system may have a high energy storage capacity relative to the platform power. For example, a ratio defined as: a total energy storage capacity of the electrical energy storage system, divided by a combined maximum rated thrust of the one or more gas turbine engines, may be greater than or equal to 0.1 Watt hours per Newton ($\mathrm{WhN^{-1}}$). The ratio may be between 0.15 and 0.50 $\mathrm{WhN^{-1}}$. In an embodiment the ratio is between 0.18 and 0.45 $\mathrm{WhN^{-1}}$. In one group of embodiments the ratio is between 0.18 and 0.28 $\mathrm{WhN^{-1}}$. In another group of embodiments the ratio is between 0.25 and 0.42 $\mathrm{WhN^{-1}}$

The method may further comprise: responsive to the determination, during the time period $\Delta T$, controlling the one or more gas turbine engines to adjust operating points thereof and thereby increase the electrical power generation capacity of the power and propulsion system. For example, during the time period $\Delta T$, the rate that fuel is supplied to an engine may be increased to move the engine to a higher thrust operating point. In this way, more electrical power can be extracted from the engine without an unacceptable erosion of its surge margin. In another example, during the time period $\Delta T$, a speed of the aircraft may be reduced. Electrical power requirements have been found to generally increase with aircraft speed, such that a decrease in speed reduces the electrical loading. The aircraft speed may be reduced by reducing the rate that fuel is supplied to an engine to move the engine to a lower thrust operating point, and/or by operating one or control surfaces of the aircraft.

Controlling the plurality of electrical loads to reduce the electrical power demand may comprise implementing a pre-defined limp mode having a reduced electrical power demand. Those skilled in the art will understand that a 'limp mode' is a pre-defined set of system operating parameters in which critical systems are operable but the overall power consumption of the system's electrical loads is reduced. Utilizing a pre-defined limp mode allows the power and propulsion to be quickly transitioned into a sustainable operating state in the available time period $\Delta T$. A plurality of different limp modes may be pre-defined, each corresponding to one or more particular types of fault. A limp mode may then be selected from amongst the plurality of pre-defined limp modes based on a type of fault that is detected.

Implementing the pre-defined limp mode may further comprise controlling the one or more gas turbine engines to adjust operating points thereof. In other words, the limp mode may also define one or more operating parameters or settings of the gas turbine engine(s). For example, the limp mode may define a thrust setting or range of thrust settings that can be used.

If $P_{fault}$ is lower than the electrical power demand, $P_D$, of the plurality of electrical loads (i.e. $P_D > P_{fault}$), controlling the plurality of electrical loads may comprise: during the time period $\Delta T$, reducing the total electrical power demand to below the reduced amount of electrical power, $P_{fault}$. Reducing the total electrical power demand may comprise controlling an operation of one or more loads to reduce their power demands. Additionally or alternatively, reducing the total electrical power demand may comprise decelerating the aircraft. Meeting at least part of the electrical power demand of the plurality of electrical loads by discharging the electrical energy storage system may comprise, during the time period $\Delta T$, supplying a deficit in the generated electrical power (e.g. $P_D$ - $P_{fault}$) from the electrical energy storage system. Thus, all electrical loads - including critical electrical loads - remain powered until after the total power demand, $P_D$, can be reduced to a sustainable level.

If $P_{fault}$, is greater than the electrical power demand, $P_D$, of the plurality of electrical loads (i.e. $P_{fault} > P_D$), meeting at least part of the electrical power demand of the plurality of electrical loads by discharging the electrical energy storage system may comprise: during the time period $\Delta T$, supplying at least part of the electrical power demand from the electrical energy storage system to maintain surge margins of the one or more gas turbine engines until the electrical power demand has been reduced. Thus, even though the power and propulsion system may still be capable of providing power to all of the electrical loads, the electrical energy storage system can be used to soften the impact of the fault on the surge margin(s) of the engine(s) and/or limit peak turbine tem peratures.

The method may further comprise, prior to the determination to the effect that there is a fault in one or more of the electric machines:

maintaining a state of charge of the electrical energy storage system above a pre-defined level. This may ensure the ESS is always in a state of readiness should there be a fault that results in a sudden drop in power generation capability. The pre-defined level may be sufficient to power one or more critical electric loads (e.g. an electric fuel pump) during the time period ΔT.

The method may further comprise, prior to the determination to the effect that there is a fault in one or more of the electric machines:

within a pre-defined time after take-off of the aircraft, charging the electrical energy storage system to a state of charge greater than or equal to a pre-defined level using electrical power generated by the one or more electric machines. The ESS may be utilized during take-off or climb, for example to add power to the engine spools to reduce fuel consumption or noise during these flight stages. After this, the ESS may be recharged to at least the pre-defined level so that the ESS is in a state of readiness should there be a fault that results in a sudden drop in power generation capability. The pre-defined level may be sufficient to power one or more critical electric loads (e.g. an electric fuel pump) during the time period ΔT.

The energy storage system may take the form of one or more batteries and/or one or more supercapacitors. It is also contemplated that fuel cells may be used. However, batteries and/or supercapacitors may be preferred to fuel cells because fuel cells, as well not being re-chargeable during flight, generally require or benefit from a level of ambient pressure not available at high altitude. If, however, the aircraft is deployed for lower-altitude flight or the fuel cell can be provided in a suitably pressurized environment, fuel cells could be used.

Each of the one or more propulsive gas turbine engines may comprise combustion equipment and an electrically-powered fuel pump for delivering fuel to the combustion equipment. The electrically-powered fuel pump receives its electrical power through the electrical system, for example from one or more dc distribution busses of the electrical system. Thus, the fuel pump is powered as long as there is electrical power available in the electrical system. This is in contrast to fuel pumps of conventional gas turbine engines in which the fuel pump(s) are powered as long as the spools of the gas turbine are rotating. For example, a fuel pump is conventionally either mechanically driven by a spool of the engine (e.g. through an accessory gearbox (AGB)) or powered by the output a dedicated variator arrangement which has mechanical power from a spool of the engine as one if its inputs (e.g. through an AGB). Utilizing an electrically-powered fuel pump, however, allows for a reduction in weight and mechanical losses due to a reduction in mechanical parts, and may allow faster and more precise control over the delivery of fuel to the combustion equipment.

The control system may be configured to control the one or more gas turbine engines and the electrical system to maintain a state of charge of the electrical energy storage system above a pre-defined level sufficient to power the electrically-powered fuel pump during the time period ΔT.

In some embodiments, the first spool is a low pressure (LP) spool and the second spool is a high pressure (HP) spool. The propulsive gas turbine engine may further comprise a fan mechanically coupled with and driven by the first (LP) spool, possibly via reduction gearbox whereby the fan rotates at a lower speed than the first (LP) spool. In other examples the engine is a three-spool engine with a HP spool, an intermediate pressure (IP) spool and an LP spool driving a fan. In this case the second spool may be the HP spool and the first spool may the IP spool.

A ratio, $P_1/T$, equal to the maximum electrical power generation rating of the first electric machine divided by the maximum thrust rating of the gas turbine engine, may be greater than or equal to 2.0 WN$^{-1}$. The thrust rating is a dry thrust rating (i.e. without the use of reheat/afterburner, if such a system is present in the engine). The first spool may be an intermediate pressure (IP) spool of the gas turbine engine. The term "intermediate pressure spool" will be understood to refer to a spool which is neither the highest pressure nor the lowest pressure spool of the engine. In other embodiments, the first spool is a low pressure (LP) spool of the gas turbine engine. The term "low pressure spool" will be understood to refer to the lowest pressure spool of the gas turbine engine. In some embodiments, the LP spool drives a fan via a reduction gearbox so that the fan rotates at a lower speed than the LP spool. The value of the ratio, $P_1/T$, may be significantly higher than in conventional gas turbine engines. The value of the ratio, $P_1/T$, may be greater than 2.5 WN$^{-1}$, greater than 3.0 WN$^{-1}$, or even greater than 3.5 WN$^{-1}$. The value of the ratio, $P_1/T$, may be less than 7.0 WN$^{-1}$, less than 6.5 WN$^{-1}$, less than 6.0 WN$^{-1}$, or less than 5.5 WN$^{-1}$. The value of the ratio, $P_1/T$, may be between 2.5 WN$^{-1}$ and 6.0 WN$^{-1}$ or between 3.0 WN$^{-1}$ and 5.5 WN$^{-1}$. In one embodiment the value of the ratio, $P_1/T$, is between 3.5 WN$^{-1}$ and 5.0 WN$^{-1}$.

A ratio, $P_2/T$, equal to the maximum electrical power generation rating of the second electric machine divided by the maximum thrust rating of the gas turbine engine, may be greater than or equal to 3.5 WN$^{-1}$. The thrust rating is a dry thrust rating (i.e. without the use of reheat/afterburner, if such a system is present in the engine). The second spool may be a high pressure (HP) spool of the gas turbine engine. The term "high pressure spool" will be understood to refer to the highest pressure spool of the engine. The value of the ratio, $P_2/T$, may be significantly higher than in conventional gas turbine engines. The value of the ratio, $P_2/T$, may be greater than 4.0 WN$^{-1}$, greater than 4.5 WN$^{-1}$, greater than 5.0 WN$^{-1}$ or

even greater than 5.5 WN$^{-1}$. The value of the ratio, $P_2/T$, may be less than 10.0 WN$^{-1}$, less than 9.5 WN$^{-1}$, less than 9.0 WN$^{-1}$, or less than 8.5 WN$^{-1}$. The value of the ratio, $P_2/T$, may be between 4.0 WN$^{-1}$ and 9.5 WN$^{-1}$, between 4.5 WN$^{-1}$ and 9.0 WN$^{-1}$, between 5.0 WN$^{-1}$ and 8.5 WN$^{-1}$ or between 5.5 WN$^{-1}$ and 8.0 WN$^{-1}$. In one embodiment the value of the ratio, $P_2/T$, is between 6.0 WN$^{-1}$ and 7.5 WN$^{-1}$. In another embodiment the value of the ratio, $P_2/T$, is between 6.0 WN$^{-1}$ and 7.5 WN$^{-1}$. In another embodiment the electric machines of the first and second spool are equally rated, e.g. P1/T and P2/T may have equal or substantially equal values greater than or equal to 2.0 WN$^{-1}$.

A ratio defined as a combined rated power of all of the one or more electrical machines mechanically coupled with the spools of the gas turbine engine divided by the maximum rated thrust of the gas turbine engine may be greater than or equal to 3.5 W/N. The thrust rating is a dry thrust rating (i.e. without the use of reheat/afterburner, if such a system is present in the engine). This may be considerably higher than the equivalent ratio for conventional gas turbine engines. The increased ratio may be achieved by providing electrical machines coupled with both the first spool and the second spool (i.e. dual spool power generation). The higher ratio may, for example, allow rapid charging of the energy storage system and an improved restart envelope. The ratio may be greater than 3.5 W/N, for example greater than or equal to 4.0 W/N, greater than or equal to 4.5 W/N, greater than or equal to 5.0 W/N, greater than or equal to 5.5 W/N, or even greater than or equal 6.0 W. The ratio may be less than 15.0 W/N. In one group of embodiments, the ratio is between 4.5 W/N and 13 W/N, and is preferably between 5.0 W/N and 12 W/N. In one embodiment, the ratio is between 8.5 W/N and 12 W/N.

The term "sub-machine" of an electric machine will be understood by those skilled in the art to refer to one of a plurality of functionally separate electric machines which share some common structure. In other words, each sub-machine is capable of generating separate electrical power or torque (depending on the mode of the operation, i.e. generator mode or motor mode), but each one of the plurality of sub-machines is not totally physically independent from the other sub-machines and thus all of the sub-machines must be deployed together. For example, two sub-machines of an electric machine may share a common rotor but have completely independent stators; they may some common stator structure (e.g. a common back iron or yoke) but have separate stator field windings; or they may be integrated together in a common casing with common support structures and cooling systems. Thus, an electric machine with two sub-machines may be considered to be an integrated arrangement of two functionally separate electric machines.

Each propulsive gas turbine engine may be of any suitable type, for example of the ducted fan type (e.g. a turbofan) or the unducted, open rotor, type

The control system may take the form of a controller or one or more controllers, each of which may be implemented in hardware, software of a combination of the two. The control system may comprise one or more functional modules of a wider control system. In some embodiments, the control system is or is part of an Electronic Engine Controller (EEC), Engine Control Unit (ECU) or Full Authority Digital Engine Controller (FADEC).

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

## BRIEF DESCRIPTION OF THE DRAWINGS

Embodiments will now be described by way of example only with reference to the accompanying drawings, which are purely schematic and not to scale, and in which:

Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figure 4 is a schematic illustration of an aircraft with a single-engine power and propulsion system;
Figure 5 is a schematic illustration of an aircraft with a twin-engine power and propulsion system; and
Figure 6 is a flow diagram illustrating a method of operating a power and propulsion system of an aircraft, and in particular responding to a fault or failure in a gas turbine engine or electrical power system.

## Detailed Description

### Figure 1

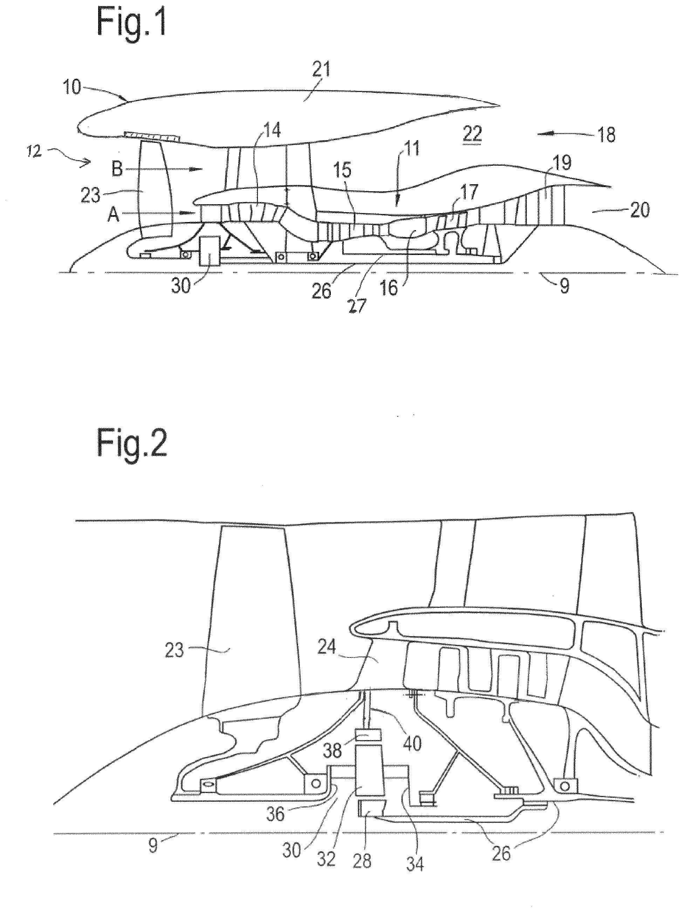

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

It will be understood that the low-pressure compressor 14, the low-pressure turbine 19 and the interconnecting shaft 26 together form the low-pressure spool. Similarly, the high-pressure compressor 15, the high-pressure turbine 17 and the interconnecting shaft 27 together form the high-pressure spool.

*Figure 2*

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

*Figure 3*

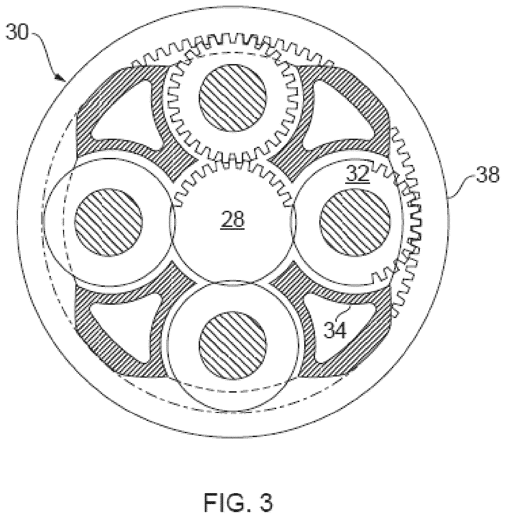

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided.

Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used.

For example, where the gearbox 30 has a star arrangement (described above), the skilled person would readily understand that the arrangement of output and support linkages and bearing locations would typically be different to that shown by way of example in Figure 2.

Accordingly, although not within the scope of the claims, the examples extend to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations.

For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, other examples my apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

***Figure 4***

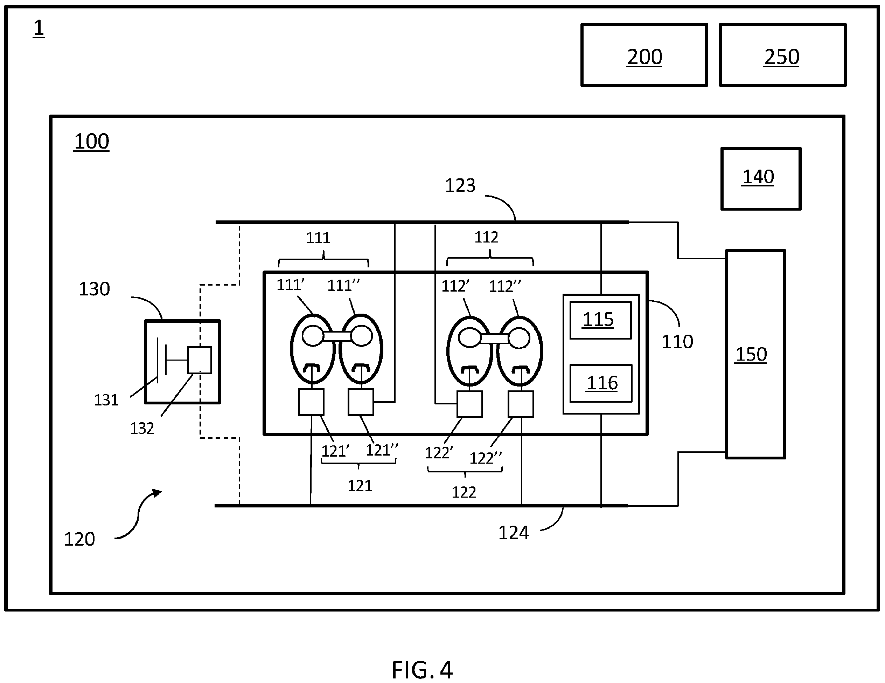

Figure 4 is a schematic illustration of an aircraft 1 which includes a power and propulsion system 100.

The power and propulsion system 100 includes a propulsive gas turbine engine 110. The engine 110 has two spools: a first spool, which in this case is a low-pressure spool having a low-pressure compressor 14; a low-pressure turbine 19; and an interconnecting shaft 26, and a second spool, which in this case is a high-pressure spool having high-pressure compressor 15; a high-pressure turbine 17; and an interconnecting shaft 27. The engine could alternatively be of the three-spool type and/or could include a gearbox as described above with reference to Figures 1-3. The engine 110 may be of the low- or high-bypass turbofan type or another type, for example the open rotor type.

The propulsive gas turbine engine 110 includes two electric machines 111, 112: a first electric machine 111 mechanically coupled with its first spool and a second electric machine 112 coupled with its second spool. Each of the machines 111, 112 is operable as both a motor and as a generator. Thus, each machine 111, 112 can either drive rotation of its spool to increase its speed, or extract mechanical power from its spool and generate electrical power therefrom.

In a preferred embodiment one or both of the electric machines 111, 112 are coaxially coupled with the shafts of the spools and embedded within the core 11 of the engine 110. The electric machines 111, 112 could, however, be coupled with the spools in another manner, for example through an auxiliary gearbox using a radial/tower shaft arrangement.

In this embodiment each electric machine 111, 112 comprises two sub-machines: the first electric machine 111 comprises a first sub-machine 111' and a second sub-machine 111"; and the second electric machine 112 comprises a first sub-machine 112' and a second sub-machine 112". The term "sub-machine" will be understood to refer to one of a plurality of functionally separate electric machines which are physically integrated together to some extent. For example, the electric machine 111 may be a dual-wound machine having a single, common rotor and a single stator structure featuring two independent sets of field windings, with the two independent sets of windings forming the two sub-machines 111', 111". Alternatively, each of the two sub-machines 111', 111" may have its own stator and its own rotor axially spaced part from the rotor and stator of the other sub-machine, with some common structure such as a common casing or mounting arrangement. Other sub-machine arrangements will occur to those skilled in the art. The overall power rating of each electric machine is preferably equally or approximately equally split between its two sub-machines, though this need not necessarily be the case: a split of 40-60% and 60-40% could be used, for example.

Each electric machine 111, 112 can be of any suitable type known in the art. In a preferred embodiment each machine 111, 112 is of the permanent magnet type, but induction or switched-reluctance machines could also be used, for example. The machines 111, 112 are preferably of the radial flux or transverse flux type, but other arrangements could be used.

The power and propulsion system 100 further includes an electrical system 120. The electrical system 120 includes one or more electrical distribution busses 123, 124 which are electrically connected with the electric machines 111, 112 of the engine 110. In this way, electrical power can be received from, delivered to and transferred between the electric machines 111, 112.

In the illustrated embodiment the electrical system 120 is a dc electrical system with one or more dc electrical distribution busses 123, 124 which interface with the electric machines 111, 112 through ac-dc power electronics converters 121, 122. The use of a dc electrical system allows a single bus to simultaneously receive electrical power from electric machines driven to rotate at different speeds, allowing for what may be referred to as 'dual spool power generation'. This means that significant amounts of electrical power can be generated from one engine 110 even at low-power engine operating points. Additionally or alternatively, the ability to simultaneously generate power from two spools of the same engine may reduce the impact on the engine operating point. This allows the engine surge margin to be maintained whilst a relatively large amount of electrical power is generated to, for example, simultaneously charge an energy storage system 130 and power engine and platform electrical loads 115, 116, 150. In other embodiments an ac electrical system may be used.

Each electric machine 111, 112 is connected with the dc electrical system 120 via a set of one or more ac-dc converters. Specifically, the first electric machine 111 has a first set of bidirectional ac-dc converters 121, including a first converter 121' for its first sub-machine 111' and a second converter 121" for its second sub-machine 111". Likewise, the second electric machine 112 has a second set of bidirectional ac-dc converters 122, including a third converter 122' for its first sub-machine 112' and a fourth converter 122" for its second sub-machine 112". Any suitable ac-dc converter topology may be used, for example H-bridges accompanied by appropriate filters.

In the illustrated embodiment, the dc-sides of the ac-dc converters 121, 122 are connected with the dc busses 123, 124 so as to provide re-configurability and fault tolerance, in addition to simultaneous dual-spool power generation. Specifically, since each electric machine 111, 112 comprises two sub-machines, each electric machine can be connected with each of the two busses 123, 124. The first sub-machine 111' of the first electric machine 111 is connectable with the first dc bus 123, the second sub-machine 111" of the first electric machine 111 can be connected with the second dc bus 124, the first sub-machine 112' of the second electric machine 111 can be connected with the first dc bus 123, and the second sub-machine 112" of the second electric machine 112 can be connected with the second dc bus 124.

Through the electrical system 120, the power and propulsion system 100 provides electrical power to various electrical loads distributed about the engine 110 and the aircraft platform 1. Platform electrical loads 150 may include, for example, one or more of: lighting, cabin environmental control systems such as heating systems, wing anti-icing systems, various actuators and the like. The engine electrical loads 115, 116 may include an electrically-powered fuel pump 115. Other engine electrical loads 116 may include, for example, an electric nacelle anti-icing system, an electrically-powered oil pump, or an electric cabin blower system.

Some of the electrical loads may be considered critical electrical loads. For example, if the engine 110 includes an electrically powered fuel pump 115 which delivers fuel to the combustion equipment 16 of the engine 110, this will be considered a critical load since a failure of or loss of power to the fuel pump will result in the engine 110 shutting down.

The power and propulsion system 100 further includes an energy storage system (ESS) 130. In preferred embodiments the ESS 130 takes the form of a rechargeable battery pack or module 131, formed from lithium-ion cells or cells of another suitable type. As illustrated by the dashed lines, the ESS is connected with the electrical system 120, possibly via a dc-dc power electronics converter 132 for conditioning the power and matching it to voltage of dc electrical system. In this embodiment it can be seen that the ESS 130 is connected with each of the dc distribution busses 123, 124.

The ESS 130 may be used as an electrical power source or sink for a variety of different purposes. For example, the ESS 130 may provide power to, or sink power from, the spool-coupled electric machines 111, 112 in order to manage the surge margin of engine, especially during engine transients such as accelerations and decelerations. The ESS 130 may also be used to power one or more of the electric machines 111, 112 as part of an electric start procedure. In accordance with the present invention, the ESS 130 is used to provide a time period, $\Delta T$, during which the power demands of the electrical loads 115, 115, 150 can be reduced and the operating point of the engine 110 modified in the event of a fault or failure which results in a drop in the electrical power generation capability of the system 100.

The aircraft 1 may further include an Auxiliary Power Unit (APU) 200. In some embodiments, one or more electric machines (not shown) driven by the APU 200 are used as an electrical power source to replace or supplement the power provided by the ESS 130 during an electric start of the engine 110. In other embodiments, however, the APU 200 may not be used for this purpose, or may be entirely omitted from the aircraft 1 to reduce weight. In some instances, for example where the ESS 120 is insufficiently charged and the APU is omitted or unable to provide power, a ground cart may be used to provide electrical power to start the engine 110.

An APU 200 is generally not capable of being started during flight. Thus, the aircraft may also further include a Ram Air Turbine (RAT) 250 or other emergency source of electrical power. In case of a loss of electrical power, the RAT 250 may be deployed, for example to charge the ESS 130 to allow an inflight restart attempt. In preferred embodiments, however, the RAT 250 may be omitted entirely to reduce aircraft weight, with the ESS 130 providing sufficient engine restart capability. In some embodiments a portion of the ESS 130 may be dedicated to providing electrical power during restart attempts so that the capability is always available. Additionally or alternatively a state of charge of the ESS 130 may be maintained above a threshold level so that the capability is always available.

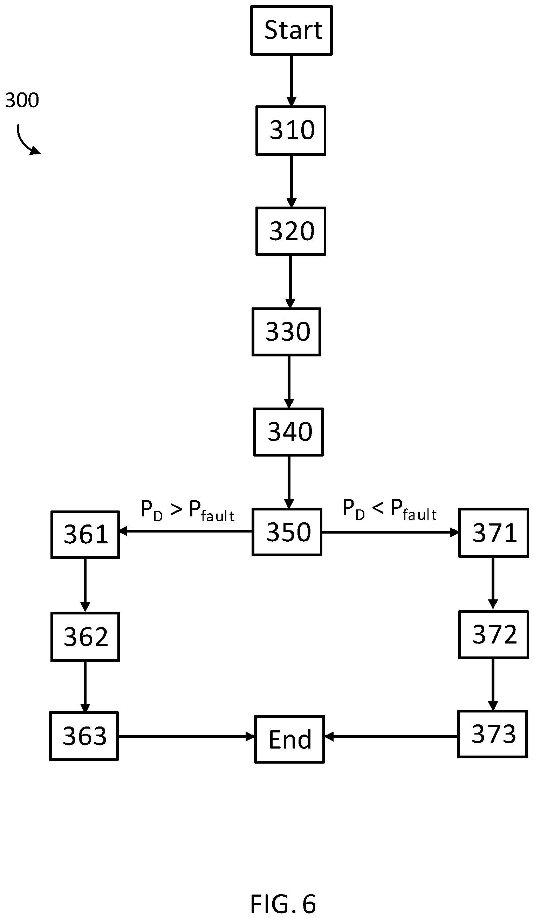

The power and propulsion system 100 further includes a control system 140. The control system 140, which can take any suitable form including a FADEC and may include one or more controllers and/or one or more functional modules, provides control of the engine 110, including the fuel pump 115 and the electrical machines 111, 112; and the electrical system 120, including the ESS 130 and the power electronics 121, 122, 132. The control system 140 may, amongst other things, control: the configuration of the electrical system 120; the modes in which the electric machines 111, 112 of the engine 110 operate; the delivery of fuel into the combustion equipment 16 of the engine 110; the mode of operation of the ESS 130, the APU 200 and/or the RAT 250; and parameters of the power electronics (e.g. switching frequencies and duty cycles of the semiconductor switches). An inflight method of controlling the power and propulsion system 100, at least partially performed under the control of the control system 140, is described below with reference to Figure 6.

*Figure 5*

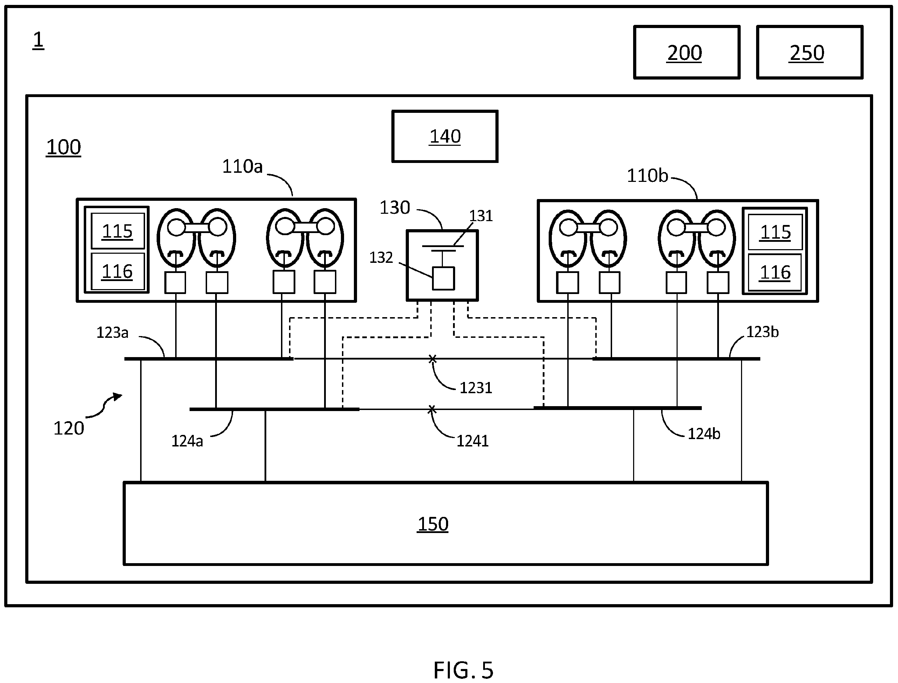

Figure 5 is a schematic illustration of an aircraft 1 with a power and propulsion system 100. The power and propulsion system 100 is substantially the same as that of Figure 4, except that it includes two propulsive gas turbine engines 110a, 110b instead of one.

In the illustrated embodiment, the dc busses 123a, 124a associated with the first engine 110a are electrically connected with the dc busses 123b, 124b associated with the second engine 110b, optionally via selectively openable and closable bus ties 1231, 1241. This allows electrical power generated by the electric machines 111, 112 of one engine (e.g. engine 110a) to be transferred to the other engine (e.g. engine 110b). This generally increases fault tolerance in the power generation system, and allows, for example, critical loads associated with the second engine 110b (e.g. its fuel pump 115) to be powered by electrical power generated by the first engine 110a in the event of a partial or total loss of electrical power generation in the second engine 110b.

Compared with existing aircraft power and propulsion systems, the power and propulsion systems 100 of the present disclosure (including both the single engine embodiment of Figure 4 and the multi-engine embodiment of Figure 5) may have electric machines 111, 112 sized and designed so that a much greater amount of electrical power can be generated from the engine spools. Combined with dual spool power generation, this means various functions such as the simultaneous management of engine surge margin and charging of the ESS 130 are possible over a wide range of engine operating points.

Table 1 illustrates exemplary peak powers for the first machine 111 (coupled with the first spool, which may be a low-pressure or intermediate-pressure spool) and the second electric machine 112 (coupled with the second spool, which may be a high-pressure spool). The values are expressed as ratios, the divider being the peak engine thrust. For the avoidance of doubt, the 'peak thrust' is the peak dry thrust, which refers to the peak thrust without the use of any afterburner or reheat.

**Table 1**

|  | Max. Power Rating / Max. Engine Thrust (WN$^{-1}$) | | |
| --- | --- | --- | --- |
|  | Example 1 | Example 2 | Example 3 |
| **Electric Machine 1** | 2.2 | 3.1 | 4.5 |
| **Electric Machine 2** | 3.8 | 6.4 | 8.0 |
| **Total** | 6.0 | 9.5 | 12.5 |

For both the electric machine power and the engine thrust, the term 'peak' will be readily understood by those skilled in the art to refer to the 'rated' values, i.e. the maximum values for which the electric machine or engine are designed to operate in without causing damage to the components. As explained above, each electric machine 111, 112 may include multiple sub-machines 111', 111", 112', 112". In this case, the peak power an electric machine (e.g. electric machine 111) is the sum of the peak powers of each of its sub-machines 111', 111".

Table 2 illustrates exemplary maximum values of the fraction of the power extracted from the spools of an engine (e.g. 110, 110a) by its electric machines during flight. In other words, the maximum value of the following percentage to occur during a flight of the aircraft 1:

$$\text{Percentage} = \frac{Electrical\ Power\ Generated\ from\ Spools}{Total\ Spool\ Power} \times 100\%$$

**Table 2**

|  | Example 1 | Example 2 | Example 3 |
| --- | --- | --- | --- |
| **Electrical Power Extracted (kW)** | 570 | 720 | 920 |
| **Total Engine Spool Power (LP + HP, MW)** | 5.5 | 9.0 | 16.0 |
| **Ratio** | 10.4% | 8.0% | 5.8% |

It will be appreciated that whilst the above relates to a two-spool engine, the same percentage can be calculated for a three-spool engine. Furthermore, it will be appreciated that the absolute values of the spool power and electrical power generation are platform-dependent and will increase or decrease depending on the size of the platform and its engines.

Compared with existing aircraft power and propulsion systems, the ESS 130 of the power and propulsion system 100 of the present disclosure may be sized and designed so as to provide a greater amount of electrical power relative to the size of the platform 1. Table 3 illustrates exemplary ESS energy storage capacities as well peak power and propulsion system thrusts (i.e. the sum of the peak thrusts of all of the propulsive engines of the platform). A ratio, defined as the total energy storage capacity divided by the maximum rated thrust of the power and propulsion system is also provided.

**Table 3**

|  | Single Engine | Twin Engine | |
| --- | --- | --- | --- |
|  | Example 1 | Example 2 | Example 3 |
| **Energy Storage Capacity (kWh)** | 15 | 25 | 240 |
| **Peak Platform Thrust (kN)** | 50 | 100 | 600 |
| **Ratio (WhN$^{-1}$)** | 0.30 | 0.25 | 0.40 |

Various modifications and alternatives to the specific embodiments illustrated in Figures 4 and 5 will occur to those skilled in the art. For example:

i. Although only single-engine and twin-engine platforms are illustrated, an aircraft could have more than two (e.g. four) propulsive gas turbine engines.

ii. In the illustrated embodiments, the full power of each electric machine 111, 112 is split between two sub-machines 111', 111"; 112', 112". This need not be the case, however the following example is not within the scope of the claims: each electric machine 111, 112 may be a single, larger electric machine of the full power rating. This may however reduce the fault-tolerance of the platform, and in particular may prevent cross-engine electric starting and restarting in the presence of one or more faults, for example a non-critical fault resulting in a partial or full loss of one or more of the electric machines.

iii. In principle each electric machine 111, 112 could have more than two (e.g. three or four) sub-machines, but the number will in practice be limited by space constraints.

iv. Not within the scope of the claims, however mentioned as an example, only one of the spools of the engine 110 may be provided with an electric machine in other embodiments. In other words, one of electric machine 111 and electric machine 112 may be omitted.

v. Whilst the illustrated embodiment has two dc busses 123, 124 per engine 110, fewer than two (i.e. one) or more than two dc busses could be provided. The use of a single bus would reduce fault tolerance compared with two busses. The use of more than two busses could increase fault tolerance but at the cost of increased system weight and complexity.

vi. Whilst a battery is illustrated, the ESS 130 could take another form. It could, for example, additionally or alternatively include one or more supercapacitors. One or more fuel cells could also be used, however this is not within the scope of the claims and batteries are preferred.

### *Figure 6*

Figure 6 is a flow chart illustrating a method 300 of operating an aircraft power and propulsion system 100 during a flight. Steps of the method 300 may be performed automatically or by a pilot of the aircraft 1 or a combination of the two, and may be performed under the control of a control system, for example the control system 140 of the power and propulsion system 100 of Figures 4 and 5. In the method 300, a fault or failure occurs in the power and propulsion system 100 (e.g. in an engine 110 and/or the electrical system 120) and this results in sudden drop in the power generation level in the power and propulsion system.

The method 300 begins at 310 where the aircraft 1 takes off and climbs, for example to a preferred cruising altitude. In some embodiments, the ESS 130 discharges to the electrical system 120 during the take-off and/or climb procedure 310 and power is delivered from the electrical system 120 to one or more of the electric machines 111, 112 of the propulsive gas turbine engine(s) 100 which operate as motor(s). The motor(s) 111, 112 drive rotation of the engine spool(s) so as to increase their speeds and increase the engine thrust. This may, for example, reduce the amount of fuel that is fuel that is consumed during take-off and climb, and/or reduce the amount of noise produced by the engine.

At 320, with the aircraft 1 and its propulsion system 100 operating at a desired operating point, one or more of the electric machine(s) 111, 112 of the engine(s) operate in generator mode to extract mechanical power from the spool(s) and generate electrical power therefrom. The electrical power is delivered to the electrical system 120, where it is utilized to power a plurality of electrical loads connected with the electrical system 120. The electrical loads can include engine electrical loads 115, 116 and platform electrical loads 150. Some of the electrical power may be transferred from the electric machine (e.g. 111) of one spool to the electric machine (e.g. 112) of another spool of the engine, or a spool of a different engine in multi-engine embodiments.

In some embodiments, the electrical loads include one or more critical electrical loads, for example one or more engine electric fuel pumps 115, whose operation is critical to the operation of the overall power and propulsion system 100. Thus, the electrical loading of the power and propulsion system 100 may have a relatively high level of criticality.

The amount of power extracted from engine spools will vary during the course of the flight, but will generally be relatively high. The amount of power extracted from one engine, expressed as a fraction of the total shaft power of the engine, is higher than 5% or even 10% at some points during the normal operation of the system 100.

At 330, during the normal operation of the aircraft 1 and its propulsion system, the ESS 130 may be intermittently discharged to the electrical system 120. For example, it may be desirable to quickly provide electrical power to one or more of the electric machines 111, 112 of the engine(s) in order to operate them as motors to manage engine surge margin during engine transients (e.g. accelerations or decelerations) or aircraft manoeuvres (e.g. turns and climbs).

At optional step 340, during the normal operation of the aircraft 1 and its propulsion system 100, the state of charge of the ESS 130 is maintained at or above a predefined level. The specific level above which the charge is maintained will depend on the specifics of the platform and the application requirements, but in accordance with the present disclosure will be high enough to power one or more and optionally all of the electrical loads 115, 116, 150 during a time period $\Delta T$. In some embodiments, the one or more electrical loads includes at least the critical electrical loads (e.g. one or both of an electric fuel pump 115 and an electric oil pump). The time period may be of the order of several seconds (e.g. 5 to 10 seconds) or possibly as high as several minutes (e.g. one or two minutes).

In some embodiments, maintaining the state of charge of the ESS 130 above the pre-defined level comprises recharging the ESS 130 following the initial discharge during take-off and climb, i.e. at step 310. For example, the control system 140 may be configured to begin or complete a recharge of the ESS 130 up to at least the predefined level within a predetermined length of time after take-off.

Additionally or alternatively, maintaining the state of charge of the ESS 130 may involve recharging the ESS 130 up to at least the predefined level following an intermittent discharge such as the one described above with reference to step 330. As another example, the control system 140 may be configured so that it does not allow the ESS 130 to discharge below the predefined level, for example by limiting intermittent discharges of the type described with reference to step 330 where a discharge would take the charge level of the ESS below the threshold.

In other embodiments, a portion of the ESS 130 may be dedicated to certain functions, particularly those described below with reference to steps 361-363 and 371-373. For example, one or more battery cells or modules of the ESS 130 may be used only for a certain set of functions and may be never be used for more general purposes such as intermittent discharge. If the ESS 130 does include a portion dedicated to said functions, the maintenance of the state of charge of the ESS 130 may be avoided.

At step 350, the control system 140 determines a condition to the effect that a fault or failure in one or more of the gas turbine engines 110 and/or in the electrical system 120 has occurred, and that the amount of electrical power that is being generated by the system 100 has dropped to a reduced level, $P_{fault}$. Possible faults and failures which could lead to a drop in the amount of power that is generated include, but are not limited to:

- A mechanical failure in a gas turbine engine 110 may limit the maximum thrust the engine can produce or cause the engine to completely shut down, resulting in a partial or total loss of electrical power generation from the affected engine 100.

- One or more phases of an electric machine 111, 112 may fail due to a short circuit fault, resulting in a total or partial loss of the power generating capability of the affected electric machine.

- One or more phases of an ac-dc converter 121, 122 may fail, resulting in a total or partial loss of the power generating capability of the affected electric machine/converter combination.

- An insulation failure in the cabling of one of the distribution busses 123, 124 of the electrical system 120 may limit the amount of generated power that can be delivered to the electrical system 120 and to the electrical loads 115, 116, 120.

At the time of the fault, the electrical system 120 will have been subject to an instantaneous power demand, $P_D$. If the instantaneous power demand prior to the fault $P_D$ is greater than the new, lower level of power generation capability, $P_{fault}$, the method 300 may proceed to steps 361-363. If instead the instantaneous power demand prior to the fault $P_D$ is lower than the new, lower level of power generation capability, $P_{fault}$, the method 300 may proceed to steps 371-373.

At 361, responsive to the determination of the condition to the effect that there has been a fault or failure in the system 100 and the amount of power being generated has suddenly dropped to below the power demand level $P_D$, the ESS 130 discharges and provides power to the electrical system for a time $\Delta T$. The amount of electrical power supplied by the ESS 130, Pass, may be at least equal to the deficit in power, <u>i.e.</u> $P_D - P_{fault}$. Preferably, however, the ESS 130 supplies an amount of power $P_{ESS} > P_D - P_{fault}$. In this way, in addition to ensuring that all electrical loads 115, 116, 150 are powered during the time period $\Delta T$, the reliance on power generated by the electric machine(s) 111, 112 of the engine(s) can be reduced and this may limit the impact on the engine surge margin during the time period $\Delta T$. In other embodiments, $P_{ESS} < P_D - P_{fault}$. For example, the ESS 130 may only provide enough electrical power to supply one or more critical electrical loads (<u>e.g.</u> a fuel pump 115 and/or oil pump) so that the only electrical loads which may be starved of power in the time period $\Delta T$ are non-critical loads.

At steps 362-363, the control system 140 uses the time period $\Delta T$ provided by the ESS 130 to adjust the operating point of the power and propulsion system 100 so that the electrical power demand, $P_D$, is lower than the amount of electrical power that is being generated by the power and propulsion system 100. In this way, after the time period $\Delta T$, the power and propulsion system 100 is at a sustainable operating point. This may be achieved by implementing either one or both of steps 362 and 363.

At step 362, the control system 140 controls the plurality of electrical loads 115, 116, 150 to reduce the total system power demand, $P_D$. Preferably, the power demand, $P_D$, is reduced to a level below $P_{fault}$. This may be achieved by completely powering off some or all of the non-critical electrical loads or adjusting the operation of some or all of the loads to states in which they consume less electrical power.

At step 363, the control system controls the gas turbine engine(s) 110, including the electric machine(s) 111, 112, to adjust the operating points of the engines(s). For example, the engine(s) may be controlled to operate at higher thrust operating points so that more electrical power can be extracted by the electric machines 111, 112 without excessive erosion of the engine surge margin.

If instead $P_D < P_{fault}$, the method proceeds from step 350 to step 371.

At step 371, responsive to the determination of the condition to the effect that there has been a fault or failure in the system 100 and the amount of power being generated has suddenly dropped, the ESS 130 discharges and provides power to the electrical system for a time $\Delta T$. Even though the amount of power being generated by the electric machines 111, 112 may be sufficient to power all of the loads, the use of the ESS 130 in this way may have the effect of softening the impact of the fault on the surge margin(s) of the engines 110.

At steps 372-373, the control system 140 uses the time period $\Delta T$ provided by the ESS 130 to adjust the operating point of the power and propulsion system 100 so that, not only is the electrical power demand $P_D$ lower than the amount of electrical power that is being generated by the power and propulsion system 100, but the engine(s) have sufficient surge margin to sustain the system operating point. This may be achieved by implementing either one or both of steps 372 and 373.

At step 372, the control system 140 controls the plurality of electrical loads 115, 116, 150 to reduce the total system power demand, $P_D$. This may be achieved by completely powering off some or all of the non-critical electrical loads or adjusting the operation of some or all of the loads to states in which they consume less electrical power.

At step 373, the control system controls the gas turbine engine(s) 110, including the electric machine(s) 111, 112, to adjust the operating points of the engines(s). For example, the engine(s) may be controlled to operate at higher thrust operating points so that more electrical power can be extracted by the electric machines 111, 112 without excessive erosion of the engine surge margin.

In some embodiments, performing either one or both of steps 362-363, or performing one or both of steps 372-373, may comprise implementing a pre-defined 'limp mode'. The term 'limp mode' or 'limp home mode' will be understood to refer to a pre-defined set of operating parameters for the power and propulsion system 100 in which critical loads and systems operate but the overall power demand is reduced. The use of a pre-defined limp mode may reduce the amount of time required by the control system 140 to move the power and propulsion system 100 to a sustainable operating point. In some embodiments, a number of different limp modes may be defined, each corresponding to one or more fault or failure modes. Thus, responsive to a diagnosis of the fault, the control system 140 may select and implement a suitable one of the limp modes during the time period $\Delta T$.

Therefore, a method 300 is provided in which an ESS 130 of a power and propulsion system 100 is used to provide a time period $\Delta T$ following a fault during which an operating point of the power and propulsion system 100 can be adjusted. Such an approach may particularly effective in a platform in which there is a relatively high degree of critically in the electrical loading, as it may help mitigate the risk that critical loads lose power following the fault. Even a brief loss of power to critical loads could result in an escalation of a fault. Additionally or alternatively, the approach may be particularly effective in a platform in which the amount of mechanical power which is extracted from the engine spools to generate electrical power is relatively large, greater than 5% or as high as for example 7%, 8% or even 10% of the total spool power. Such a system 100 may be sensitive to the erosion of engine surge margin following a fault, and engine surge following a fault could result in an escalation of a fault.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein. The scope of protection is defined in the appended claims.

**Claims**

1. A method (300) of operating an aircraft power and propulsion system (100), the power and propulsion system (100) comprising one or more propulsive gas turbine engines (110; 110a, 110b), each engine comprising a plurality of spools (16, 19, 26; 15, 17, 27) including a first spool and a second spool, a first electric machine (111) mechanically coupled with the first spool and a second electric machine (112) mechanically coupled with the second spool, wherein each of the first and second electric machines (111, 112) of each of the one or more gas turbine engines comprises a first sub-machine (111', 112') and a second sub-machine (111", 112"); and an electrical system (120) connected with the electric machines and comprising an electrical energy storage system (130), the method (300) comprising:

   operating (320) one or more of the electric machines (111, 112) of the one or more gas turbine engines (110; 110a, 110b) as generators to extract, for each of the one or more gas turbine engines, greater than 5% of a combined mechanical power of the plurality of the spools (16, 19, 26; 15, 17, 27) and to generate electrical power therefrom;
   meeting an electrical power demand, $P_D$, of a plurality of electrical loads (115, 116, 150) connected with the electrical system (120) by supplying the plurality of electrical loads with electrical power generated by the one or more electric machines (111, 112);
   determining (350) a condition to the effect that there is a fault in one or more of the electric machines and that an amount of electrical power being generated by the power and propulsion system (100) has reduced to a lower level, $P_{fault}$; and
   responsive to the determination (350):

      during a time period $\Delta T$, meeting (361, 371) at least part of the electrical power demand of the plurality of electrical loads (115, 116, 150) by discharging the electrical energy storage system (130); and
      during the time period $\Delta T$, controlling (362) the plurality of electrical loads (115, 116, 150) to reduce the electrical power demand.

2. The method (300) of claim 1, further comprising:
   responsive to the determination (350), during the time period $\Delta T$, controlling (363, 373) the one or more gas turbine engines (110; 110a, 110b) to adjust operating points thereof and thereby increase an electrical power generation capacity of the power and propulsion system (100).

3. The method (300) of claim 1 or claim 2, in which controlling (361, 362) the plurality of electrical loads (115, 116, 150) to reduce the electrical power demand comprises implementing a pre-defined limp mode having a reduced electrical power demand.

4. The method (300) of any one of the preceding claims, in which the reduced electrical power generating level, $P_{fault}$, is lower than the electrical power demand, $P_D$, of the plurality of electrical loads (115, 116, 150), and wherein:

   controlling the plurality of electrical loads (115, 116, 150) comprises, during the time period $\Delta T$, reducing (362) the total electrical power demand to below the reduced amount of electrical power, $P_{fault}$; and
   meeting (361) at least part of the electrical power demand of the plurality of electrical loads (115, 116, 150) by discharging the electrical energy storage system (130) comprises, during the time period $\Delta T$, supplying a deficit in the generated electrical power from the electrical energy storage system.

5. The method (300) of any one of claims 1 to 3, in which the reduced electrical power generating level, $P_{fault}$, is greater than the electrical power demand, $P_D$, of the plurality of electrical loads (115, 116, 150), and wherein:
   meeting (371) at least part of the electrical power demand of the plurality of electrical loads (115, 116, 150) by discharging the electrical energy storage system (130) comprises, during the time period $\Delta T$, supplying at least part of the electrical power demand from the electrical energy storage system to maintain surge margins of the one or more gas turbine engines (110; 110a, 110b) until the electrical power demand has been reduced.

6. The method (300) of any one of the preceding claims, further comprising, prior to the determination (350) to the effect that there is a fault in one or more of the electric machines (111,112):
maintaining (340) a state of charge of the electrical energy storage system (130) at or above a pre-defined level.

7. The method (300) of claim 6, further comprising, prior to the determination (350) to the effect that there is a fault in one or more of the electric machines (111,112):
within a pre-defined time after take-off of the aircraft (1), charging the electrical energy storage system (130) to a state of charge greater than or equal to the pre-defined level using electrical power generated by the one or more electric machines (111, 112).

8. The method (300) of claim 6 or claim 7, in which the plurality of electrical loads (115, 116, 150) include one or more critical electrical loads (115), and wherein the pre-defined level is sufficient to power the one or more critical electric loads during the time period $\Delta T$.

**Patentansprüche**

1. Verfahren (300) zum Betrieb eines Kraft- und Antriebssystems (100) für Flugzeuge, wobei das Kraft- und Antriebssystem (100) ein oder mehrere antreibende Gasturbinentriebwerke (110; 110a, 110b) umfasst, wobei jedes Triebwerk eine Vielzahl von Spulen (16, 19, 26; 15, 17, 27) umfasst, beinhaltend eine erste Spule und eine zweite Spule, eine erste elektrische Maschine (111), die mechanisch mit der ersten Spule gekoppelt ist, und eine zweite elektrische Maschine (112), die mechanisch mit der zweiten Spule gekoppelt ist, wobei jede von der ersten und der zweiten elektrischen Maschine (111, 112) von jedem von dem einen oder den mehreren Gasturbinentriebwerken eine erste Teilmaschine (111', 112') und eine zweite Teilmaschine (111", 112") umfasst; und ein elektrisches System (120), das mit den elektrischen Maschinen verbunden ist und ein elektrisches Energiespeichersystem (130) umfasst, wobei das Verfahren (300) Folgendes umfasst:

Betreiben (320) von einer oder mehreren von den elektrischen Maschinen (111, 112) von dem einen oder den mehreren Gasturbinentriebwerken (110; 110a, 110b) als Generatoren, um für jedes von dem einen oder den mehreren Gasturbinentriebwerken mehr als 5 % einer kombinierten mechanischen Kraft der Vielzahl der Spulen (16, 19, 26; 15, 17, 27) zu extrahieren und um elektrische Kraft daraus zu erzeugen;
Erfüllen eines elektrischen Kraftbedarfs, $P_D$, einer Vielzahl von elektrischen Lasten (115, 116, 150), die mit dem elektrischen System (120) verbunden sind, durch Liefern von elektrischer Kraft, die durch die eine oder mehreren elektrischen Maschinen (111, 112) erzeugt wird, an die Vielzahl von elektrischen Lasten;
Bestimmen (350) einer Bedingung, dass es einen Fehler in einer oder mehreren von den elektrischen Maschinen gibt und dass sich eine Menge an elektrischer Kraft, die durch das Kraft- und Antriebssystem (100) erzeugt wird, auf ein niedrigeres Niveau, $P_{fault}$, reduziert hat; und
als Reaktion auf die Bestimmung (350):

während eines Zeitraums $\Delta T$, Erfüllen (361, 371) von zumindest Teil des elektrischen Kraftbedarfs der Vielzahl von elektrischen Lasten (115, 116, 150) durch Entladen des elektrischen Energiespeichersystems (130); und
während des Zeitraums $\Delta T$, Steuern (362) der Vielzahl von elektrischen Lasten (115, 116, 150), um den elektrischen Kraftbedarf zu reduzieren.

2. Verfahren (300) nach Anspruch 1, ferner umfassend:
als Reaktion auf die Bestimmung (350), während des Zeitraums $\Delta T$, Steuern (363, 373) des einen oder der mehreren Gasturbinentriebwerke (110; 110a, 110b), um Betriebspunkte davon anzupassen und dadurch eine elektrische Krafterzeugungskapazität des Kraft- und Antriebssystems (100) zu erhöhen.

3. Verfahren (300) nach Anspruch 1 oder Anspruch 2, wobei das Steuern (361, 362) der Vielzahl von elektrischen Lasten (115, 116, 150), um den elektrischen Kraftbedarf zu reduzieren, Implementieren eines vordefinierten Notlaufmodus mit einem reduzierten elektrischen Kraftbedarf umfasst.

4. Verfahren (300) nach einem der vorhergehenden Ansprüche, wobei das reduzierte elektrische Krafterzeugungsniveau, $P_{fault}$, niedriger als der elektrische Kraftbedarf, $P_D$, der Vielzahl von elektrischen Lasten (115, 116, 150) ist, und wobei:

das Steuern der Vielzahl von elektrischen Lasten (115, 116, 150) während des Zeitraums $\Delta T$ Reduzieren (362)

des gesamten elektrischen Kraftbedarfs auf unter die reduzierte Menge an elektrischer Kraft, $P_{fault}$, umfasst; und das Erfüllen (361) von zumindest Teil des elektrischen Kraftbedarfs der Vielzahl von elektrischen Lasten (115, 116, 150) durch Entladen des elektrischen Energiespeichersystems (130) während des Zeitraums $\Delta T$ Liefern eines Defizits in der erzeugten elektrischen Kraft von dem elektrischen Energiespeichersystem umfasst.

5. Verfahren (300) nach einem der Ansprüche 1 bis 3, wobei das reduzierte elektrische Krafterzeugungsniveau, $P_{fault}$, größer als der elektrische Kraftbedarf, $P_D$, der Vielzahl von elektrischen Lasten (115, 116, 150) ist, und wobei: das Erfüllen (371) von zumindest Teil des elektrischen Kraftbedarfs der Vielzahl von elektrischen Lasten (115, 116, 150) durch Entladen des elektrischen Energiespeichersystems (130) während des Zeitraums $\Delta T$ Liefern von zumindest Teil des elektrischen Kraftbedarfs von dem elektrischen Energiespeichersystem umfasst, um Stoßreserven von dem einen oder den mehreren Gasturbinentriebwerken (110; 110a, 110b) aufrechtzuerhalten, bis der elektrische Kraftbedarf reduziert worden ist.

6. Verfahren (300) nach einem der vorhergehenden Ansprüche, ferner umfassend, vor der Bestimmung (350), dass es einen Fehler in einer oder mehreren der elektrischen Maschinen (111,112) gibt: Aufrechterhalten (340) eines Ladezustands des elektrischen Energiespeichersystems (130) bei oder über einem vordefinierten Niveau.

7. Verfahren (300) nach Anspruch 6, ferner umfassend, vor der Bestimmung (350), dass es einen Fehler in einer oder mehreren der elektrischen Maschinen (111, 112) gibt: innerhalb einer vordefinierten Zeit nach Abheben des Flugzeugs (1), Laden des elektrischen Energiespeichersystems (130) auf einen Ladezustand größer als das oder gleich dem vordefinierten Niveau unter Verwendung von elektrischer Kraft, die durch die eine oder mehreren elektrischen Maschinen (111, 112) erzeugt wird.

8. Verfahren (300) nach Anspruch 6 oder Anspruch 7, wobei die Vielzahl von elektrischen Lasten (115, 116, 150) eine oder mehrere kritische elektrische Lasten (115) beinhaltet und wobei das vordefinierte Niveau ausreicht, um die eine oder mehreren kritischen elektrischen Lasten während des Zeitraums $\Delta T$ anzutreiben.

**Revendications**

1. Procédé (300) de fonctionnement d'un système d'alimentation et de propulsion (100) d'aéronef, le système d'alimentation et de propulsion (100) comprenant un ou plusieurs moteurs à turbine à gaz propulsifs (110 ; 110a, 110b), chaque moteur comprenant une pluralité de corps (16, 19, 26 ; 15, 17, 27) comprenant un premier corps et un second corps, une première machine électrique (111) couplée mécaniquement au premier corps et une seconde machine électrique (112) couplée mécaniquement au second corps, chacune des première et seconde machines électriques (111, 112) de chacun du ou des moteurs à turbine à gaz comprenant une première sous-machine (111', 112') et une seconde sous-machine (111", 112") ; et un système électrique (120) raccordé aux machines électriques et comprenant un système de stockage d'énergie électrique (130), le procédé (300) comprenant :

le fonctionnement (320) d'une ou de plusieurs des machines électriques (111, 112) du ou des moteurs à turbine à gaz (110 ; 110a, 110b) en tant que générateurs pour extraire, pour chacun du ou des moteurs à turbine à gaz, plus de 5 % d'une puissance mécanique combinée de la pluralité de corps (16, 19, 26 ; 15, 17, 27) et pour générer une puissance électrique à partir de celle-ci ;
la satisfaction d'une demande de puissance électrique, $P_D$, d'une pluralité de charges électriques (115, 116, 150) raccordées au système électrique (120) en fournissant à la pluralité de charges électriques une puissance électrique générée par la ou les machines électriques (111, 112) ;
la détermination (350) d'une condition selon laquelle une défaillance existe dans une ou plusieurs des machines électriques et une quantité de puissance électrique générée par le système d'alimentation et de propulsion (100) a réduit à un niveau inférieur, $P_{défaillance}$ : et
en réponse à la détermination (350) :

durant une période de temps $\Delta T$, la satisfaction (361, 371) d'au moins une partie de la demande de puissance électrique de la pluralité de charges électriques (115, 116, 150) en déchargeant le système de stockage d'énergie électrique (130) ; et
durant la période de temps $\Delta T$, la commande (362) de la pluralité de charges électriques (115, 116, 150) pour réduire la demande de puissance électrique.

**2.** Procédé (300) de la revendication 1, comprenant en outre :
en réponse à la détermination (350), durant la période de temps $\Delta T$, la commande (363, 373) du ou des moteurs à turbine à gaz (110 ; 110a, 110b) pour régler leurs points de fonctionnement et ainsi augmenter une capacité de génération de puissance électrique du système d'alimentation et de propulsion (100).

**3.** Procédé (300) de la revendication 1 ou la revendication 2, dans lequel la commande (361, 362) de la pluralité de charges électriques (115, 116, 150) pour réduire la demande de puissance électrique comprend la mise en oeuvre d'un mode dégradé prédéfini présentant une demande de puissance électrique réduite.

**4.** Procédé (300) de l'une quelconque des revendications précédentes, dans lequel le niveau réduit de génération de puissance électrique, $p_{\text{défaillance}}$, est
inférieur à la demande de puissance électrique, $P_D$, de la pluralité de charges électriques (115, 116, 150), et :

ladite commande de la pluralité de charges électriques (115, 116, 150) comprenant, durant la période de temps $\Delta T$, la réduction (362) de la demande totale de puissance électrique en dessous de la quantité réduite de puissance électrique, $P_{\text{défaillance}}$ ; et
ladite satisfaction (361) d'au moins une partie de la demande de puissance électrique de la pluralité de charges électriques (115, 116, 150) en déchargeant le système de stockage d'énergie électrique (130) comprenant, durant la période de temps $\Delta T$, la fourniture d'un déficit dans la puissance électrique générée à partir du système de stockage d'énergie électrique.

**5.** Procédé (300) de l'une quelconque des revendications 1 à 3, dans lequel le niveau réduit de génération de puissance électrique, $P_{\text{défaillance}}$, est supérieur à la demande de puissance électrique, $P_D$, de la pluralité de charges électriques (115, 116, 150), et :
ladite satisfaction (371) d'au moins une partie de la demande de puissance électrique de la pluralité de charges électriques (115, 116, 150) par la décharge du système de stockage d'énergie électrique (130) comprenant, durant la période de temps $\Delta T$, la fourniture d'au moins une partie de la demande de puissance électrique à partir du système de stockage d'énergie électrique pour maintenir les marges de pompage du ou des moteurs à turbine à gaz (110 ; 110a, 110b) jusqu'à ce que la demande de puissance électrique ait été réduite.

**6.** Procédé (300) de l'une quelconque des revendications précédentes, comprenant en outre, avant la détermination (350) selon laquelle une défaillance existe dans une ou plusieurs des machines électriques (111, 112) :
le maintien (340) d'un état de charge du système de stockage d'énergie électrique (130) à un niveau prédéfini ou au-dessus de ce-dernier.

**7.** Procédé (300) de la revendication 6, comprenant en outre, avant la
la détermination (350) selon laquelle une défaillance existe dans une ou plusieurs des machines électriques (111, 112) :
dans les limites d'un temps prédéfini après le décollage de l'aéronef (1), la charge du système de stockage d'énergie électrique (130) jusqu'à un état de charge supérieur ou égal au niveau prédéfini à l'aide de la puissance électrique générée par la ou les machines électriques (111, 112).

**8.** Procédé (300) de la revendication 6 ou la revendication 7, dans lequel la pluralité de charges électriques (115, 116, 150) comprend une ou plusieurs charges électriques critiques (115), et ledit niveau prédéfini étant suffisant pour alimenter la ou les charges électriques critiques durant la période de temps $\Delta T$.

## Fig.1

## Fig.2

FIG. 3

FIG. 4

EP 4 197 913 B1

FIG. 5

EP 4 197 913 B1

300

```
                            ┌─────────┐
                            │  Start  │
                            └────┬────┘
                                 │
                                 ▼
                            ┌─────────┐
                            │   310   │
                            └────┬────┘
                                 │
                                 ▼
                            ┌─────────┐
                            │   320   │
                            └────┬────┘
                                 │
                                 ▼
                            ┌─────────┐
                            │   330   │
                            └────┬────┘
                                 │
                                 ▼
                            ┌─────────┐
                            │   340   │
                            └────┬────┘
                                 │
                                 ▼
```

$P_D > P_{fault}$      $P_D < P_{fault}$

```
┌─────┐      ┌─────────┐      ┌─────┐
│ 361 │◄─────│   350   │─────►│ 371 │
└──┬──┘      └─────────┘      └──┬──┘
   │                            │
   ▼                            ▼
┌─────┐                      ┌─────┐
│ 362 │                      │ 372 │
└──┬──┘                      └──┬──┘
   │                            │
   ▼                            ▼
┌─────┐      ┌─────────┐      ┌─────┐
│ 363 │─────►│   End   │◄─────│ 373 │
└─────┘      └─────────┘      └─────┘
```

FIG. 6

**EP 4 197 913 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012318914 A1
- EP 3344545 B1
- US 2011178648 A1